# EUROPEAN PATENT SPECIFICATION

(11) **EP 3 077 300 B1**
(45) Date of publication and mention of the grant of the patent: **15.11.2017**
(21) Application number: 14805304.4
(22) Date of filing: 01.12.2014
(51) Int. Cl.: B65D 41/04

(54) **CLOSURE CAP**
VERSCHLUSSKAPPE
CAPSULE DE FERMETURE

(30) Priority: 02.12.2013 EP 13195242
(43) Date of publication of application: 12.10.2016
(73) Proprietor: Nestec S.A., 1800 Vevey (CH)
(72) Inventor: CERVENY, Jean-Paul, F-88800 Vittel (FR); PREVOTAT, Francois, F-54000 Nancy (FR)
(74) Representative: Rosolen-Delarue, Katell
(86) International application number: PCT/EP2014/076122
(87) International publication number: WO 2015/082410

(56) References cited:
- WO-A1-2011/098739
- WO-A1-2013/066209
- DE-U1-202006 010 719
- US-A1- 2013 175 274

## Description

### Field of the invention

The present invention relates to a closure cap for a liquid container, to a container comprising said closure cap and to a mold used in the manufacturing of the closure cap.

### Background of the invention

It is known to equip the neck of a container such as a liquid container, e.g. a bottle, with a closure cap.

It is especially known for plastic bottle to provide a closure cap for capping the mouth of the bottle.

Conventionally, the neck of the plastic bottle is provided with a male thread and the cap for capping the bottle is provided with a corresponding female thread on its inner surface for engaging the male thread around the neck of the bottle.

The threaded sections of both neck and cap are toroïdal and may be cylindrical or have a slightly tapered shape. The number and pitch of the threads are largely standardized. Typically the external diameter of the neck (inside diameter of the lid) is about 30 mm. The height of the cap is about 15 mm.

Such caps have a cylindrical outer surface or skirt that has a diameter that is typically 1-2 mm wider than the diameter of the bottle neck. The skirt is often fluted, with knurls perpendicular to the mouth of the cap, for facilitating grip. The top surface of the cap is a circular disk shape that may be slightly domed. Such caps are generally made by injection molding.

Despite the fluting striations, many people, especially the elderly, infirm and children, have difficulty in opening such bottles. This is also especially the case when the cap is short, for example caps having a height around 10 mm. The consumers find difficulty in handling the cap and applying sufficient torque to unscrew the cap from the neck of the bottle.

Furthermore, such caps are also uneasy to handle when consumers need to reclose the bottle.

It should also be noted that small caps increase the risk of choking hazard by children when swallowed.

It has been proposed to make the cap taller but it increases the weight of cap and thereby the cost of it.

It has also been proposed to have caps comprising projection of different kinds. Such caps, which have the features of the preamble of appended claim 1, are disclosed in WO 2011/098739 and WO 2013/066209. The present invention aims at proposing new innovating caps remedying this drawback and providing alternative solutions.

### Summary of the invention

In this respect, the invention relates to a closure cap as defined in accordance with claim 1.

It is to be noted that the cap according to the invention is easier to grip and to handle than prior art closures due to the fact that the cap is wider.

Furthermore, as the gripping means are made of projections projecting outwardly of the skirt of the cap, it allows saving material in comparison to a wider cap without projections.

According to a first feature, the at least two kinds of projections are of distinct shape. The shape is chosen according to the wished effect: rigidity, flexibility, and unscrewing assistance ... but also on the visual aspect.

According to another feature, the at least two kinds of projections are of different flexibility. Indeed, it could be appreciated to have rigid projections assisting maintaining important torque for the unscrewing and soft projections for a comfortable screwing.

According to a further feature, the at least two kinds of projections are, alone or by group, alternately positioned on the outer surface of the skirt. The proposed alternation gives a nice visual effect but also allows the fingers having the correct projection (for a specific intention) at immediate proximity.

Still according to another feature, the at least two kinds of projections have distinct functions. The U shape is chosen as allowing applying important torque, especially when the projections are large.

The shape, rigidity, direction and alternation of the projections will determine the level of assistance provided to the consumer for the unscrewing and screwing operations.

The invention also relates to a container comprising:
- a neck having an aperture, and
- a closure cap mounted on the neck for closing said aperture.

The closure cap equipping said container is according to any of claims 1 to 5. Thus, if, for instance, the container of the invention is a liquid container, a consumer will easily and in a more convenient manner open and/or close the container of the invention.

This advantage is provided at least by the closure cap of claim 1.

However, the container according to the invention is not limited to a liquid container. For example, the container may alternatively contain other substances as gel, powder, pills, etc.

According to a further aspect, the invention relates to a mold for forming a closure cap of a container by injection molding.

This mold is in accordance with Claim 7.

### Brief description of the drawings

The invention is further described with reference to the following examples. It will be appreciated that the invention as claimed is not intended to be limited in any way by these examples.

Embodiments of the present invention will now be described, by way of examples, with reference to the accompanying figures in which:
- Figure 1 is a schematic view of a closure cap according to prior art to be mounted on the neck of a liquid container (partly represented);
- Figures 2a and 2b are schematic perspective views of a closure cap which is no part of the present invention but has some of its features;
- Figure 3 is a top view of the cap of Figures 2a and 2b;
- Figure 4 is a cross-section view on the section plane AA of Figure 3;
- Figures 5a and 5b are schematic perspective views of a closure cap according to the invention;
- Figure 6 is a top view of the cap of Figures 5a and 5b;
- Figure 7 is a cross-section view on the section plane AA of Figure 6;

### Detailed description of the invention

As used in the following description, the words "comprises", "comprising", and similar words, are not to be interpreted in an exclusive or exhaustive sense. In other words, they are intended to mean including, but not limited to.

Any reference to prior art documents in this specification is not to be considered as an admission that such prior art is widely known or forms part of the common general knowledge in the field.

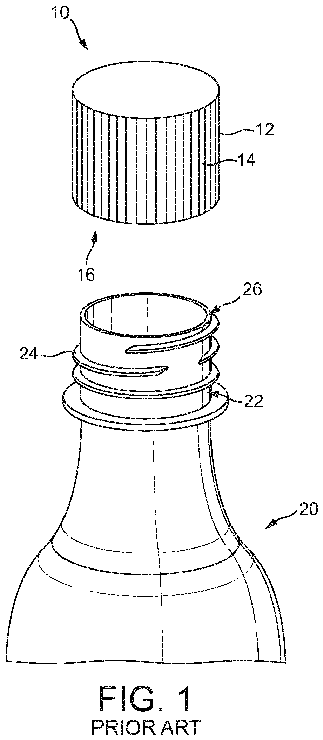

**Figure 1** represents a prior art closure cap 10 for capping the aperture 28 of a plastic container 20 (partial view) in a vertical position.

As already presented in the background of the invention, conventionally the neck 22 of the plastic container 20 is provided with a male thread 24.

The cap 10 comprises a mouth 18 and a cylindrical outer surface called skirt 12. The cap 10 is provided with a female thread 16 on its inner surface, for correspondingly engaging the male thread 24 around the neck 22 of the container 20. The skirt 12 has a diameter shortly wider than the diameter of the container neck 22for engaging around the neck

The threaded sections 24 and 16 of both neck 22 and cap 10 are toroidal.

The skirt 12 comprises knurls 14 perpendicular to the mouth 18 of the cap 10, for facilitating grip.

But in many circumstances, the knurls 14 of skirt 12 are not enough and many people have difficulties in opening and/or closing closure caps.

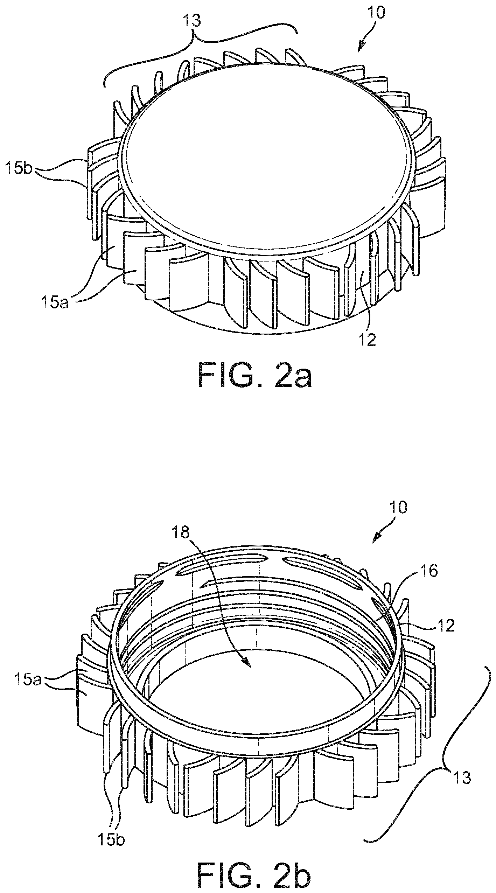

**Figures 2a, 2b****,** **3 and 4** show a closure cap having some of the features of the invention and will be described together.

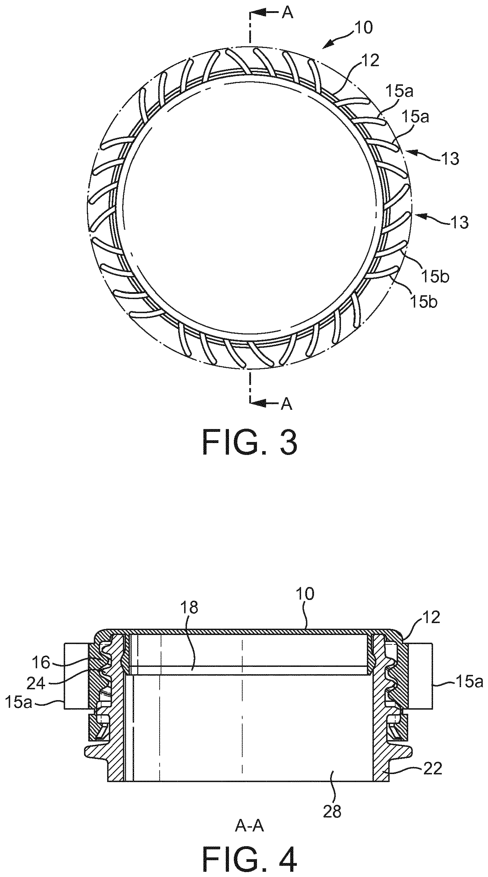

Figures 2a and 2b present schematic perspective views of a closure cap and are complementary to figure 3 which is a top view of the cap of figures 2a and 2b. In this first embodiment, the closure cap 10 is intended for capping the aperture 28 of a plastic container (only the neck 22 of the container is shown). The characteristic in relation to the threaded sections 24 and 16 on the neck 22 and cap 10 are similar to the prior art.

The cylindrical outer surface of the closure cap 10: skirt 12 comprises extended gripping means 13 projecting vertically and outwardly of the skirt 12. These specific characteristics are shown in figure 4 which is a cross-section view on the section plane AA of Figure 3.

As presented in figure 3, said gripping means 13 comprises two different kinds of projections 15a, 15b. Said projections are grouped into two kinds of different projections and said groups alternate on the outer surface of the skirt 12.

In the present case, projections 15a and 15b are grouped by four and alternate around the outer surface of the cap: A group of four projections 15a of a first kind alternates with a group of four projections 15b of the other kind and so on.

Projections 15a and 15b have finned or curvy shapes and as can be clearly seen in figure 3, the two kinds of projections are projecting in different directions (clockwise and counterclockwise) around the outer surface of skirt 12.

Due to the projections 15a, 15b, the cap is larger than usual which helps people to handle it.

In addition, as the projections are projecting in different directions, the projections help handling the cap for opening it as well as for closing it on the container. The presented projections allow a real efficient grip and enable to apply important torque without any slide on the cap.

Furthermore, a larger cap may address the choking hazard and therefore makes the cap safer for young children.

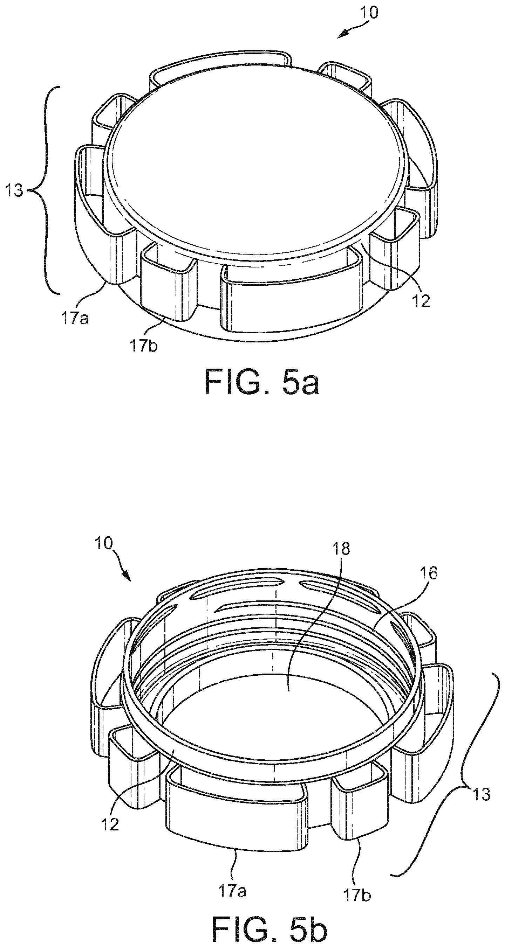

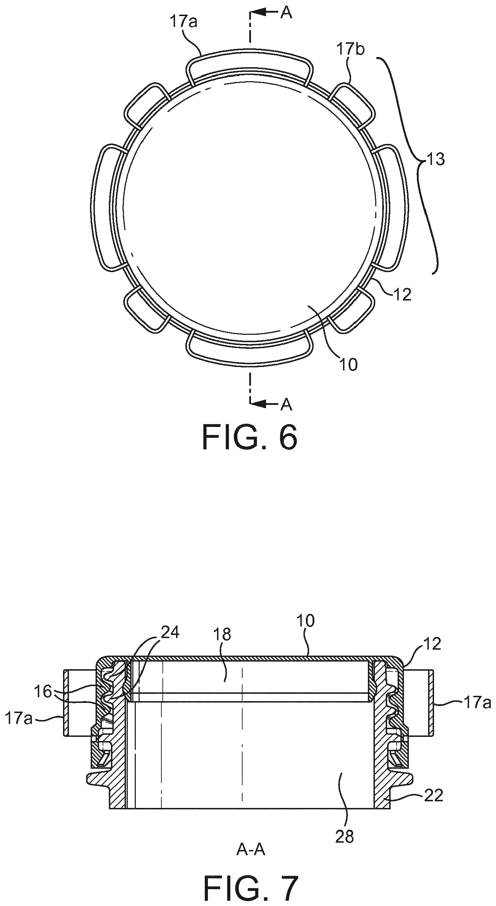

**Figures 5a**, **5b****,** **6 and 7** **show** an embodiment of the invention and will be described together.

In this embodiment, the references similar to the ones presented in the frame of the prior art and of the cap of figures 2-4 present elements similar as the ones already described.

In this embodiment, the projections are different from the ones of the first embodiment.

Both kinds of projections 17a and 17b have a U shape which extremities are extending from the skirt.

In the proposed design, projections 17a have a U base wider than the one of projection 17b. As a consequence, projections 17a are more flexible than projections 17b.

Thanks to the specific shape of projections 17a, the plastic material adapts itself under the force of a user fingers during unscrewing the cap thereby giving softer sensation and better comfort to the consumer.

The specific shape of projections 17a also allows an easier selection of the cap during the capping process.

In the present embodiment there is an alternation of projections 17a and 17b that allows the cap to have a regular design. In addition the four projections 17a give the visual impression of having a square cap more than a round one.

As can be seen from the above, the shape and alternation of the projections can be chosen according to the needed functions in terms of handling and gripping and according to the wished visual effect.

However, the presence of projection allows having wider caps which is very important for an increasing number of people in the most economical way.

It should be understood that various changes and modifications to the presently preferred embodiment described herein will be apparent to those skilled in the art. Such changes and modifications can be made without departing from the scope of the present invention as claimed hereinafter and without diminishing its attendant advantages.

## Claims

1. A closure cap (10) for capping the aperture (28) of a container (20) having a neck (22) with a male thread (24), the cap (10) comprising a threaded female cylindrical section (16) for engaging the male thread (24) of the neck; said closure cap (10) comprising on its outer surface a skirt (12) comprising outwardly projecting gripping means (13), said gripping means (13) comprising projections (15a, 15b, 17a, 17b) of at least two different kinds **characterized in that** the projections (17a, 17b) have a U shape which extremities are extending from the skirt.

2. A closure cap according to claim 1 **characterized in that** the at least two kinds of projections (17a, 17b) are of distinct shape.

3. A closure cap according to any of claims 1 or 2 **characterized in that** the at least two kinds of projections (17a, 17b) are of different flexibility.

4. A closure cap according to any of claims 1 to 3 **characterized in that** the at least two kinds of projections (15a, 15b) are, alone or by group, alternately positioned on the outer surface of the skirt (12).

5. A closure cap according to any of claims 1 to 4 **characterized in that** the at least two kinds of projections (17a, 17b) have distinct functions.

6. A container (20), comprising:
- a neck (22) having an aperture (28), and
- a closure cap (10) mounted on the neck for closing said aperture (28),
**characterized in that** said closure cap (10) is in accordance with any one of claims 1 to 5.

7. A mould for forming, by injection molding, a closure cap (10) for capping the aperture (28) of a container (20) according to any of claims 1 to 5.

## Patentansprüche

1. Verschlusskappe (10) zum Verschließen der Öffnung (28) eines Behälters (20) mit einem Hals (22) mit einem Außengewinde (24), wobei die Kappe (10) einen zylindrischen Gewindebuchsenabschnitt (16) zum Eingreifen in das Außengewinde (24) des Halses umfasst, wobei die Verschlusskappe (10) auf ihrer Außenoberfläche eine Einfassung (12) umfasst, die nach außen vorstehende Greifmittel (13) umfasst, wobei die Greifmittel (13) Überstände (15a, 15b, 17a, 17b) mindestens zwei verschiedener Arten umfassen, **dadurch gekennzeichnet, dass** die Überstände (17a, 17b) eine U-Form aufweisen, deren Endpunkte sich von der Einfassung erstrecken.

2. Verschlusskappe nach Anspruch 1, **dadurch gekennzeichnet, dass** die mindestens zwei Arten von Überständen (17a, 17b) unterschiedlicher Form sind.

3. Verschlusskappe nach einem der Ansprüche 1 oder 2, **dadurch gekennzeichnet, dass** die mindestens zwei Arten von Überständen (17a, 17b) unterschiedlicher Flexibilität sind.

4. Verschlusskappe nach einem der Ansprüche 1 bis 3, **dadurch gekennzeichnet, dass** die mindestens zwei Arten von Überständen (15a, 15b), alleine oder gruppenweise, abwechselnd auf der äußeren Oberfläche der Einfassung (12) positioniert sind.

5. Verschlusskappe nach einem der Ansprüche 1 bis 4, **dadurch gekennzeichnet, dass** die mindestens zwei Arten von Überständen (17a, 17b) unterschiedliche Funktionen haben.

6. Behälter (20), umfassend:
- einen Hals (22) mit einer Öffnung (28) und
- eine Verschlusskappe (10), die an dem Hals befestigt ist, zum Schließen der Öffnung (28),
**dadurch gekennzeichnet, dass** die Verschlusskappe (10) einem der Ansprüche 1 bis 5 entspricht.

7. Form zum Formen, durch Spritzguss, einer Verschlusskappe (10) zum Verschließen der Öffnung (28) eines Behälters (20) nach einem der Ansprüche 1 bis 5.

## Revendications

1. Capuchon de fermeture (10) pour fermer l'ouverture (28) d'un récipient (20) ayant un col (22) avec un filetage mâle (24), le capuchon (10) comprenant une section cylindrique femelle filetée (16) pour venir en prise avec le filetage mâle (24) du col ; ledit capuchon de fermeture (10) comprenant sur sa surface extérieure une jupe (12) comprenant des moyens de préhension faisant saillie vers l'extérieur (13), lesdits moyens de préhension (13) comprenant des saillies (15a, 15b, 17a, 17b) d'au moins deux types différents, **caractérisé en que** les saillies (17a, 17b) ont une forme en U dont les extrémités s'étendent à partir de la jupe.

2. Capuchon de fermeture selon la revendication 1, **caractérisé en ce que** lesdits au moins deux types de saillies (17a, 17b) sont de forme distincte.

3. Capuchon de fermeture selon l'une quelconque des revendications 1 ou 2, **caractérisé en ce que** lesdits au moins deux types de saillies (17a, 17b) présentent une souplesse différente.

4. Capuchon de fermeture selon l'une quelconque des revendications 1 à 3, **caractérisé en ce que** lesdits au moins deux types de saillies (15a, 15b) sont positionnés, seuls ou en groupe, en alternance sur la surface extérieure de la jupe (12).

5. Capuchon de fermeture selon l'une quelconque des revendications 1 à 4, **caractérisé en ce que** lesdits au moins deux types de saillies (17a, 17b) ont des fonctions distinctes.

6. Récipient (20), comprenant :
- un col (22) ayant une ouverture (28), et
- un capuchon de fermeture (10) monté sur le col pour fermer ladite ouverture (28),
**caractérisé en ce que ledit** capuchon de fermeture (10) est conforme à l'une quelconque des revendications 1 à 5.

7. Moule pour former, par moulage par injection, un capuchon de fermeture (10) pour fermer l'ouverture (28) d'un récipient (20) selon l'une quelconque des revendications 1 à 5
